# EUROPÄISCHE PATENTANMELDUNG

(11) **EP 1 388 665 A2**
(43) Veröffentlichungstag der Anmeldung: **11.02.2004**
(21) Anmeldenummer: 03016368.7
(22) Anmeldetag: 19.07.2003
(51) Int. Cl.: F02M 61/14, F02M 61/18

(54) **Vorrichtung zum Einspritzen von Kraftstoff**

(30) Priorität: 09.08.2002 DE 10236623
(71) Anmelder: DaimlerChrysler AG, 70567 Stuttgart (DE)
(72) Erfinder: Ganz, Benedikt, Dr., 76477 Elchesheim-Illing. (DE); Gaudry, Jean-Francois, 70193 Stuttgart (DE); Hartmann, Hans, 70374 Stuttgart (DE); Klenk, Rolf, Dr., 70327 Stuttgart (DE); Mlejnek, Andreas, 70327 Stuttgart (DE); Rössler, Klaus, 73776 Altbach (DE); Scheffel, Helmut, 71088 Holzgerlingen (DE); Strubel, Dirk, 70327 Stuttgart (DE); Zahn, Matthias, Dr., 68239 Mannheim (DE)

(57) **Zusammenfassung**

Die Erfindung betrifft eine Vorrichtung zum Einspritzen von Kraftstoff in einen Brennraum (3) einer Brennkraftmaschine (1) mit einem Injektor (4), welcher mit einer derartig ausgebildeten Einspritzdüse (5) in den Brennraum (3) ragt, daß der Kraftstoff in einem unsymmetrischen Strahlbild (6) bezüglich einer Längsachse (22) des Injektors (4) eingespritzt wird, wobei der Injektor (4) in einer dem vorgesehenen Strahlbild (6) entsprechenden Lage ausgerichtet in einer Injektoraufnahme (8) im Zylinderkopf (2) angeordnet ist.

Um die Einspritzvorrichtung derart auszubilden, daß der Injektor (4) bei dauerhaft genauer Ausrichtung einfach montierbar ist, ist erfindungsgemäß vorgesehen, daß der Injektor (4) mit einem Federelement (10) axial in der Injektoraufnahme (8) verspannt ist und von einem Fixierungsmittel (13) formschlüssig in seiner Lage gehalten ist.

## Beschreibung

Die Erfindung betrifft eine Vorrichtung zum Einspritzen von Kraftstoff in einen Brennraum einer Brennkraftmaschine gemäß dem Oberbegriff des Patentanspruchs 1.

Aus der DE 198 04 463 A1 ist ein Kraftstoffeinspritzsystem bekannt, bei dem ein Injektor mit einer derartig ausgebildeten Einspritzdüse in den von einer Kolben/Zylinder-Einheit gebildeten Brennraum einragt, daß der Kraftstoff in einem unsymmetrischen bzw. nicht rotationssymmetrischen Strahlbild bezüglich einer Längsachse des Injektors eingespritzt wird. Die bekannte Einspritzdüse ist mit einer Vielzahl von Einspritzlöchern versehen, wobei bei einer Einspritzung die Einspritzstrahlen gezielt gerichtet werden, um bei einem strahlgeführten Brennverfahren die für eine Verbrennung erforderliche Gemischwolke aus Kraftstoff und Verbrennungsluft zu bilden. Das bekannte Kraftstoffeinspritzsystem ist für Ottomotoren vorgesehen, wobei bekanntlich zündfähiges Gemisch im Bereich der Zündkerze bereitgestellt werden muß. Die Zündkerze ist im Brennraum abseits der Längsachse des Injektors angeordnet und dementsprechend ist ein derartig unsymmetrisches Strahlbild vorgesehen, daß wenigstens ein Strahl annähernd in Richtung auf die Zündkerze gerichtet ist, während die weiteren Strahlen eine im wesentlichen geschlossene bzw. zusammenhängende Gemischwolke bilden sollen. Der Injektor, der in einer Injektoraufnahme im Zylinderkopf aufgenommen ist, ist in der Injektoraufnahme auszurichten, so daß das unsymmetrische Strahlbild in der gewünschten Drehwinkellage in den Brennraum eingespritzt wird.

Die Ausrichtung der Injektoren zur Erzeugung des gewünschten Strahlbildes erfordert bei der Montage der Injektoren einen hohen Aufwand. Insbesondere beim Verspannen der Injektoren ist auf die Orientierung ein besonderes Augenmerk zu richten, da ungenaue Ausrichtung die Zielorientierung der Unsymmetrien im Einspritzbild stört bzw. zunichte macht.

Der vorliegenden Erfindung liegt die Aufgabe zugrunde, die gattungsgemäße Einspritzvorrichtung derart auszubilden, daß der Injektor bei dauerhaft genauer Ausrichtung einfach montierbar ist.

Diese Aufgabe wird erfindungsgemäß mit den Merkmalen des Patentanspruchs 1 gelöst.

Durch die erfindungsgemäße Axialverspannung des Injektors in der Injektoraufnahme mittels eines Federelementes kann der Injektor mit definierter Krafteinleitung bei der Montage in der Injektoraufnahme befestigt werden, wodurch ein Einfluß der Verspannung auf die Orientierung der für das Strahlbild maßgeblichen Einspritzdüse ausgeschlossen wird. Bei einer einfachen Montage wird der Injektor formschlüssig von einem Fixierungsmittel in der ausgerichteten Lage in der Injektoraufnahme gehalten.

In bevorzugter Ausbildung ist das Federelement an einem mittels Bajonettverschlusses in die Injektoraufnahme eingefügten Schulterelement abgestützt, wodurch der Injektor mit dem Federelement durch eine einfache Bajonettbewegung, d. h. eine kombinierte Axial- und Drehbewegung rasch in die Injektoraufnahme einfügbar ist. Vorzugsweise ist das Federelement dabei eine um die Längsachse des Injektors gewundene Schraubenfeder und dabei das Schulterelement als Federteller ausgebildet, welcher den Injektor radial überragt, wodurch der Injektor mit dem Federelement und dem Federteller als gemeinsame Baugruppe in die Injektoraufnahme montierbar ist. Die Handhabung dieser Baugruppe bei der Montage wird weiter vereinfacht, wenn der Federteller topfartig ausgebildet ist und in seinem Inneren den Injektor und die Schraubenfeder teilweise aufnimmt.

Als vorteilhafte Fixierungsmittel des Injektors werden Nut/Paßfeder-Verbindungen, Nut/Stift-Verbindungen oder gemeinsame Anlageflächen des Injektors mit dem anliegenden Bauteil gesehen. Der Injektor kann dabei mit dem Fixierungsmittel an dem Zylinderkopf festgelegt werden. Alternativ wird eine Festlegung des Injektors in der ausgerichteten Lage an einem starr eingebauten Bauteil der Kraftstoffzuführung vorgeschlagen, beispielsweise einer gemeinsamen Druckleitung aller Injektoren (sogenanntes Common Rail). Bei der Fixierung des Injektors an dem kraftstoffzuführenden Bauteil ist eine Steckverbindung besonders vorteilhaft, die bei der Montage des Injektors eine rasche und genaue Ausrichtung des Injektors ermöglicht. Die erfindungsgemäße Vorrichtung zum Einspritzen von Kraftstoff ist insbesondere bei fremdgezündeten Brennkraftmaschinen vorteilhaft, wobei der Injektor bezüglich einer in den Brennraum ragenden Zündkerze ausgerichtet wird. Dabei kann an den Zylinderkopf eine entsprechende Markierung für die Lage der Zündkerze vorgesehen sein. Die erfindungsgemäß orientierte Montage des Injektors kann aber auch bei Diesel-Brennkraftmaschinen Vorteile bringen, wenn eine unsymmetrisch auszubildende Gemischwolke im Brennraum zu orientieren ist.

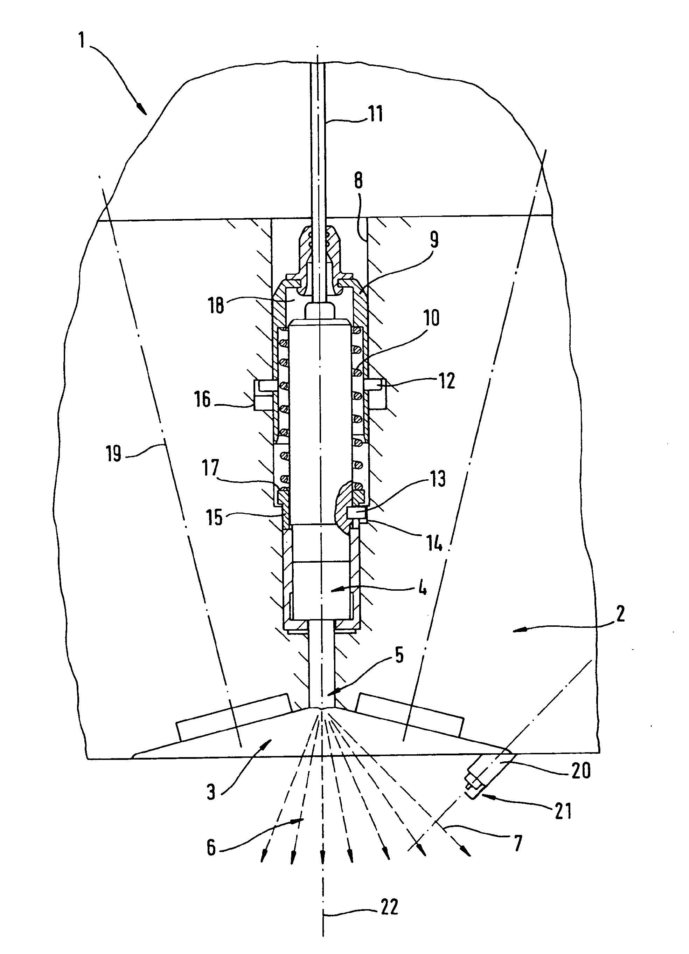

Ein Ausführungsbeispiel der Erfindung ist nachstehend anhand der Zeichnung näher erläutert.

Die einzige Zeichnungsfigur zeigt den Längsschnitt durch den Zylinderkopf 2 einer Otto-Brennkraftmaschine 1. Der Zylinderkopf 2 begrenzt mit seiner Innenseite einen Brennraum 3 einer nicht näher dargestellten Kolben/Zylindereinheit der Brennkraftmaschine 1. In dem Brennraum 3 wird in an sich bekannter Weise ein Kraftstoff/Luft-Gemisch gebildet, welches zum Antrieb des längsbeweglichen Kolbens von dem Zündfunken einer in den Brennraum 3 einragenden Zündkerze 20 zu zünden ist. Zur Zuführung der für die Verbrennung erforderlichen Frischluft wird ein Einlaßkanal durch Öffnen des hier angedeuteten Einlaßventils 19 freigegeben. In den Brennraum 3 und die darin befindliche Frischluft wird bei jedem Arbeitsspiel Kraftstoff von einem Injektor 4 direkt eingespritzt, der in zentraler Lage auf einer Symmetrieachse 22 im Zylinderkopf 2 angeordnet ist.

Der Injektor 4 ist in eine im Zylinderkopf 2 ausgesparte Injektoraufnahme 8 eingesetzt und über eine Kraftstoffzuführung 11 mit einer Druckleitung verbunden, aus der auch die Injektoren der anderen Zylinder der Brennkraftmaschine 1 gespeist werden. Der Injektor 4 ragt mit seiner Einspritzdüse 5 in den Brennraum, welche im vorliegenden Ausführungsbeispiel mit einer Vielzahl von Einspritzöffnungen versehen ist. Die Einspritzstrahlen 7 der Mehrlochdüse 5 erzeugen im Brennraum 3 mit der Verbrennungsluft die zu zündende Kraftstoffwolke, wobei im Hinblick auf eine sichere Entflammung des Gemisches ein unsymmetrisches Strahlbild 6 unter Berücksichtigung der Lage der Elektroden 21 der Zündkerze 20 erzeugt wird. Dabei kann ein im wesentlichen rotationssymmetrisches Kegelbild 6 erzeugt werden, aus deren Mantelbereich einer oder mehrere Kraftstoffstrahlen herausgeführt werden und in die Nähe der Elektroden 21 gespritzt werden. Die bezüglich der Längsachse unsymmetrische Gemischbildung mit dem Ziel, zündfähiges Gemisch zwischen die Elektroden 21 der Zündkerze 20 zu bringen, wird durch entsprechende Anordnungen der Düsenöffnungen auf der Oberfläche der Einspritzdüse 5 erreicht.

Um die unsymmetrische Strahlerscheinung im Hinblick auf das Ziel, dadurch zündfähiges Gemisch zwischen die Elektroden 21 der Zündkerze 20 zu bringen, nach der Zündkerze 20 auszurichten, ist der Injektor 4 in der entsprechenden Drehwinkellage in der Injektoraufnahme 8 zu positionieren. Eine einfache Montage des Injektors wird erfindungsgemäß dadurch erreicht, daß der Injektor 4 mit einem Federelement 10 axial in der Injektoraufnahme 8 verspannt ist und von einem Fixierungsmittel 13 formschlüssig in seiner Lage gehalten ist. Das Federelement ist als um die Längsachse 22 des Injektors 4 gewundene Schraubenfeder 10 ausgebildet, welche sich an einem mittels Bajonettverschlusses 12 in die Injektoraufnahme 8 eingefügten Federteller 9 abstützt.

Der Federteller 9 überragt den Injektor 4 in radialer Richtung und bietet so der Schraubenfeder 10 eine Stützschulter. Der Federteller 9 ist topfartig ausgebildet und nimmt in seinem Innenraum 18 die Schraubenfeder 10 und das hintere Ende des Injektors 4 auf, an das die Kraftstoffzuführung 11 durch einen Boden des Federtellers 9 angeschlossen ist. Auf diese Weise bilden der Federteller 9, die Schraubenfeder 10 und der Injektor eine gemeinsame Baugruppe, die bei der Montage der Einspritzvorrichtung auf einfache Weise in die Injektoraufnahme 8 im Zylinderkopf 2 einfügbar und durch eine einfache Montagebewegung durch den Bajonettverschluß 12 festlegbar ist. Die Schraubenfeder 10 stützt sich auf der dem Federteller 9 gegenüberliegenden Seite an einer Schulter 17 einer Buchse 15 ab, welche die Einspritzdüse 5 am Grund der Injektoraufnahme 8 genau festlegt.

Mit der erfindungsgemäßen Befestigung des Injektors 4 über eine Druckfeder 10 und eine Bajonettverriegelung des Federtellers 9 wird eine definierte Verspannung des Injektors 4 erreicht, so daß einer schädlichen Verschiebung der Drehwinkellage der Einspritzdüse 5 am Grund der Injektoraufnahme und deren Strahlbild 6 im Brennraum 3 entgegengewirkt wird.

Der Mehrlochinjektor 4 ist im vorliegenden Ausführungsbeispiel gegen Verdrehen gesichert durch eine Fixierung im Zylinderkopf, welche hier durch eine Tastfeder 13 und eine entsprechende Nut 14 in der Wandung der Injektoraufnahme 8 gebildet ist. Alternativ kann die Verdrehsicherung auch durch andere formschlüssige Fixierungsmittel erreicht werden, wie etwa Nut/Stift-Verbindungen oder Anlageflächen, jeweils axial und radial.

Die Sicherung des Injektors gegen Verdrehen kann vorteilhaft auch durch formschlüssige Fixierung des Injektors an der Kraftstoffzuführung 11 erfolgen, was insbesondere bei einer Kraftstoffversorgung aller Injektoren auf einer gemeinsamen Druckleitung vorteilhaft ist. Die Kraftstoffzuführung befindet sich dabei in einer vordefinierten Einbaulage, an der sich der Injektor mit dem Fixierungsmittel in der gewünschten Orientierung seiner Einspritzdüse 5 relativ zur Zündkerze 20 im Brennraum 3 festlegen läßt. Zur Festlegung des Injektors an der Kraftstoffzuführung 11 ist neben den oben genannten Fixierungsmitteln eine Steckverbindung vorteilhaft, wobei der Injektor bei der Montage der Einspritzvorrichtung bereits durch das Zusammenstecken mit der Kraftstoffzuführung 11 ausgerichtet wird.

Der Bajonettverschluß 12 zur Verriegelung des Federtellers 9 in der Injektoraufnahme 8 besteht aus dem radial auf der Außenseite des Federtellers 9 hervorstehenden Bajonetteil 12, welcher in einen Hinterschnitt 16 in der Wandung der Injektoraufnahme 8 einzuführen ist. Der Hinterschnitt 16 befindet sich in einer axialen Tiefe der Injektoraufnahme 8, die abgestimmt ist mit der Axiallage des Bajonettverschlusses 12 an dem Federteller 9 im Hinblick auf die Einbaulage des Injektors 4. Der Hinterschnitt 16 befindet sich in einer Drehwinkellage, die der Ausrichtung des Injektors 4 unter Berücksichtigung des unsymmetrischen Strahlbildes entspricht, so daß eine fehlerfreie Montage des Injektors 4 gewährleistet ist, und zwar durch Einfügen der Injektorbaugruppe in die Injektoraufnahme 8 und Verdrehen des Bajonettverschlusses 12 in die konstruktiv durch den Hinterschnitt 16 vorgegebene Drehwinkellage.

## Patentansprüche

1. Vorrichtung zum Einspritzen von Kraftstoff in einen Brennraum (3) einer Brennkraftmaschine (1) mit einem aus einer Kraftstoffzuführung (11) gespeisten Injektor (4), welcher mit einer derartig ausgebildeten Einspritzdüse (5) in den Brennraum (3) ragt, daß der Kraftstoff in einem unsymmetrischen Strahlbild (6) bezüglich einer Längsachse (22) des Injektors (4) eingespritzt wird, wobei der Injektor (4) in einer dem vorgesehenen Strahlbild (6) entsprechenden Lage ausgerichtet in einer Injektoraufnahme (8) angeordnet ist, welche in einem den Brennraum (3) abschließenden Zylinderkopf (2) ausgebildet ist,
**dadurch gekennzeichnet,**
**daß** der Injektor (4) mit einem Federelement (10) axial in der Injektoraufnahme (8) verspannt ist und von einem Fixierungsmittel (13) formschlüssig in seiner Lage gehalten ist.

2. Vorrichtung nach Anspruch 1,
**dadurch gekennzeichnet,**
**daß** das Federelement (10) an einem mittels Bajonettverschlusses (12) in die Injektoraufnahme (8) eingefügten Schulterelement (9) abgestützt ist.

3. Vorrichtung nach Anspruch 2,
**dadurch gekennzeichnet,**
**daß** das Federelement (10) eine um die Längsachse (22) des Injektors (4) gewundene Schraubenfeder (10) ist und das Schulterelement als Federteller (9) ausgebildet ist, welcher den Injektor (4) radial überragt.

4. Vorrichtung nach Anspruch 3,
**dadurch gekennzeichnet,**
**daß** der Federteller (9) topfartig ausgebildet ist und in seinem Innenraum (18) den Injektor (4) und die Schraubenfeder (10) teilweise aufnimmt.

5. Vorrichtung nach einem der Ansprüche 1 bis 4,
**dadurch gekennzeichnet,**
**daß** der Injektor (4) mit dem Fixierungsmittel (13) an dem Zylinderkopf (2) orientiert festgelegt wird.

6. Vorrichtung nach einem der Ansprüche 1 bis 4,
**dadurch gekennzeichnet,**
**daß** der Injektor (4) mit dem Fixierungsmittel (13) an der Kraftstoffzuführung (11) orientiert festgelegt wird.

7. Vorrichtung nach Anspruch 5 oder 6,
**dadurch gekennzeichnet,**
**daß** als Fixierungsmittel (13) eine Nut/Paßfeder-Verbindung, Nut/Stift-Verbindung oder gemeinsame Anlageflächen des Injektors (4) mit dem anliegenden Bauteil vorgesehen sind.

8. Vorrichtung nach Anspruch 6,
**dadurch gekennzeichnet,**
**daß** als Fixierungsmittel ein Steckkontakt des Injektors (4) mit einem kraftstoffzuführenden Bauteil vorgesehen ist.

9. Vorrichtung nach einem der Ansprüche 1 bis 8,
**dadurch gekennzeichnet,**
**daß** die Einspritzdüse (5) mehrere Düsenöffnungen aufweist, welche entsprechend dem vorgesehenen Strahlbild (6) auf der Oberfläche der Einspritzdüse (5) angeordnet sind.

10. Vorrichtung nach einem der Ansprüche 1 bis 9,
**dadurch gekennzeichnet,**
**daß** der Injektor (4) bezüglich einer in den Brennraum (3) ragenden Zündkerze (20) ausgerichtet ist.
